# EUROPEAN PATENT SPECIFICATION

(11) **EP 2 811 195 B1**
(45) Date of publication and mention of the grant of the patent: **18.10.2017**
(21) Application number: 14171625.8
(22) Date of filing: 06.06.2014
(51) Int. Cl.: F16D 65/092

(54) **Railway vehicle disk brake pad**
Schienenfahrzeugscheibenbremsbelag
Plaquette de frein à disque de véhicule ferroviaire

(30) Priority: 07.06.2013 IT RM20130334
(43) Date of publication of application: 10.12.2014
(73) Proprietor: Cofren S.r.l., Avellino (IT)
(72) Inventor: De Soccio, Vittorio, 82100 Benevento (IT)
(74) Representative: Bosman, Cesare

(56) References cited:
- EP-A1- 1 318 321
- DE-A1- 10 043 528
- DE-U1- 20 205 315
- US-A- 3 198 294
- US-A- 5 123 514

## Description

The present invention relates to a railway vehicle disk brake pad, as for instance known from EP-A-1 318 321. As is known, disk brakes are subject to severe stress, and optimum braking depends on the braking force being transmitted effectively to the disk pad.

For some time now, the trend has been towards pads with a number of small friction members, as opposed to one large one. In one such solution, each pad comprises a main bearing plate; a number of supporting plates fixed to the main plate; and a number of friction members fixed individually or in pairs to respective supporting plates.

To ensure efficient cooling of the friction members, Patent DE10043528 describes and claims a solution whereby respective spacers are inserted between the supporting plates and the main plate to which they are fixed. The spacers form a gap between the supporting plates and the main plate, so as to ventilate and cool the friction members.

Each spacer has a centre hole which, on the assembled pad, is engaged by a rivet to secure the supporting plate to the main plate.

Though successful in ventilating the underside of the friction members, the spacers described and claimed in DE10043528 inevitably increase the number of component parts for assembly, thus increasing assembly time and the weight of the pad as a whole. The increase in the weight of the pad, in particular, increases wear on the seals and the noise level when braking.

A need is therefore felt for a solution by which to form a ventilation gap to cool the friction members, but without incurring the drawbacks of the known art.

According to the present invention, there is provided a railway vehicle disk brake pad with the essential characteristics indicated in Claim 1, and the preferred and/or auxiliary characteristics indicated in Claims 2-4.

A non-limiting embodiment of the present invention will be described, purely by way of example, with reference to the attached drawings, in which :
Figure 1 shows a plan view of a base plate of the pad according to the present invention;
Figure 2 shows a section along line II-II of the Figure 1 base plate;
Figure 3 shows a partly see-through plan view of the pad according to the present invention;
Figure 4 shows a cross section along line IV-IV in Figure 3.

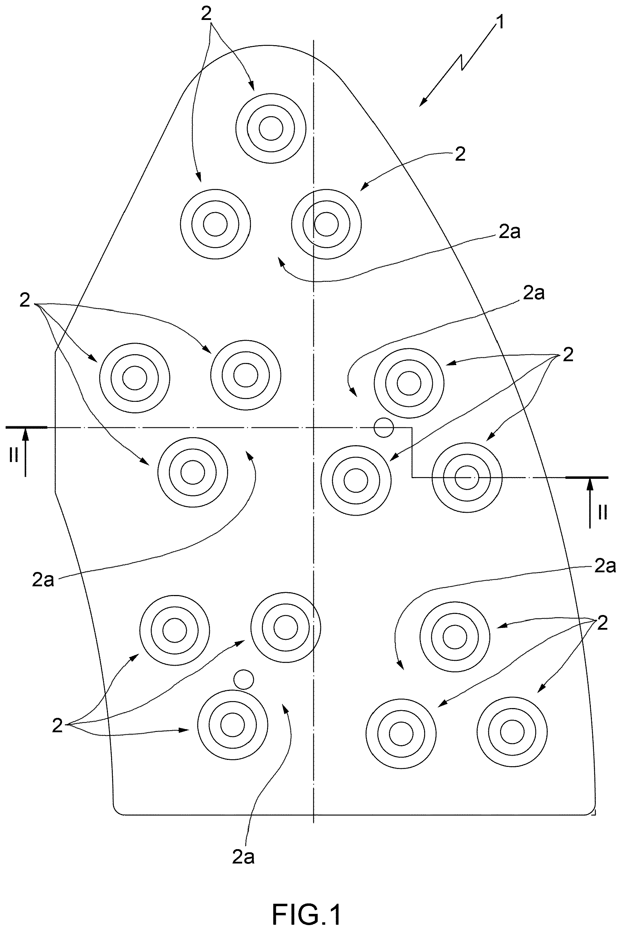

Number 1 in Figure 1 indicates as a whole a base plate of the disk brake pad according to the present invention.

Base plate 1 comprises a number of circular perforated drawing portions 2 arranged in groups 2a, each comprising three perforated drawing portions 2 arranged in the form of a triangle.

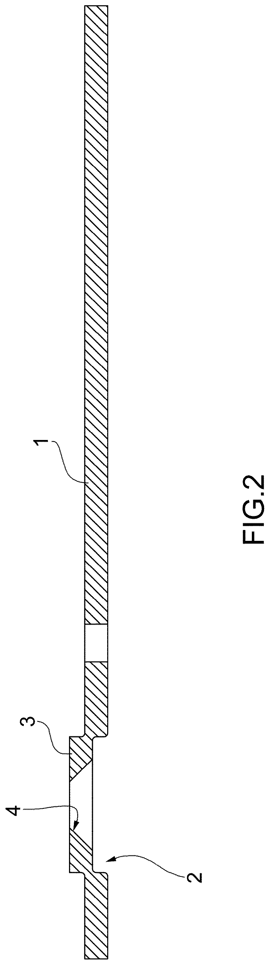

As shown more clearly in Figure 2, each perforated drawing portion 2 comprises a circular projection 3 with a centre hole 4 defined by a truncated-cone-shaped wall. In actual use, hole 4 is engaged by a rivet for securing a supporting plate to base plate 1, as described below.

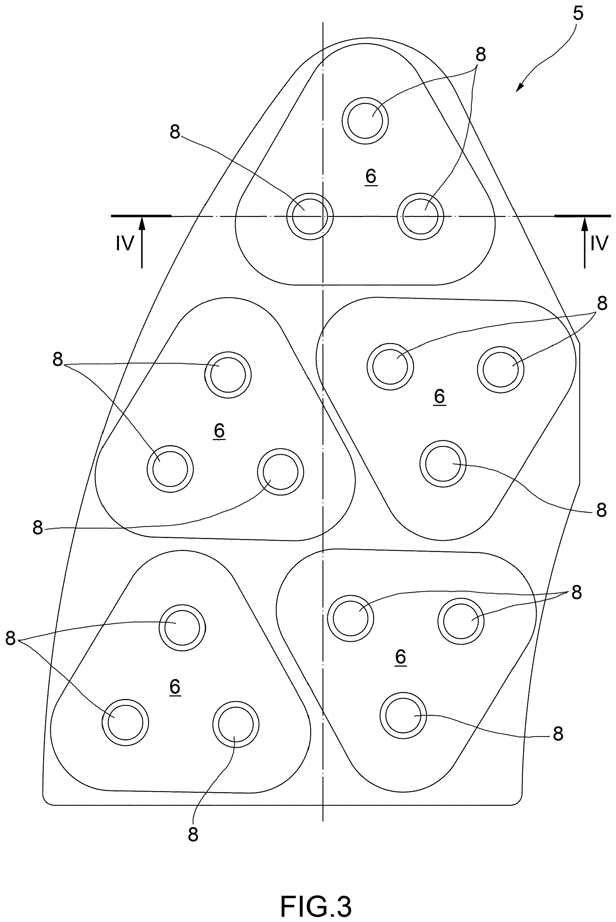

Number 5 in Figure 3 indicates as a whole a railway vehicle disk brake pad in accordance with the present invention.

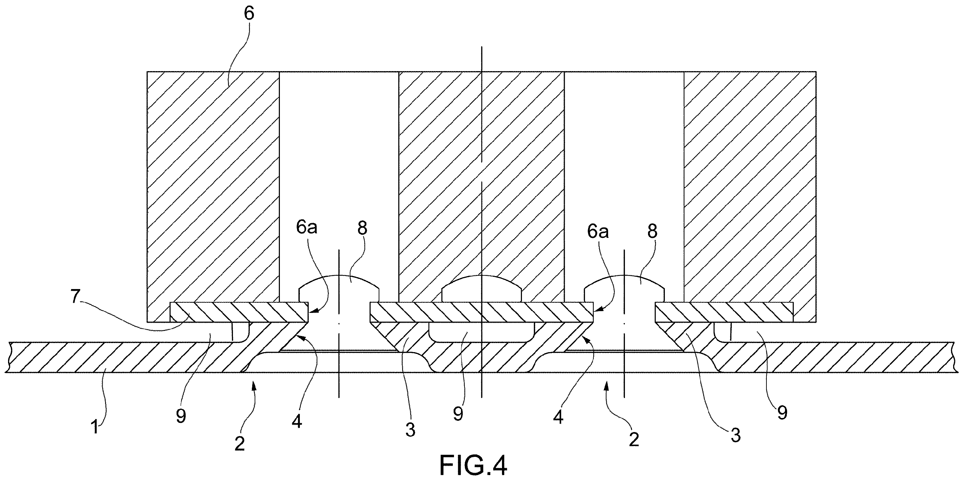

Pad 5 comprises base plate 1; five triangular friction members 6, each fixed to a respective supporting plate 7 (shown in Figure 4); and a number of rivets 8 for securing supporting plates 7 to base plate 1. More specifically, each supporting plate 7 is fixed to base plate 1 by three rivets 8 arranged in the form of a triangle.

As shown in Figure 4, to fix each supporting plate to the base plate, each rivet 8 engages both centre hole 4 in the respective perforated drawing portion 2, and a hole 6a formed in supporting plate 7. Obviously, each supporting plate 7 has three holes 6a arranged in he form of a triangle.

Once pad 5 is assembled, rivets 8 fix the relative supporting plates 7 directly contacting circular projections 3 of perforated drawing portions 2. In other words, circular projections 3 support supporting plates 7 detached from the rest of the surface of base plate 1, thus forming a gap 9, between base plate 1 and each supporting plate 7, in which to ventilate and effectively cool friction members 6.

With respect to the solution in Patent DE10043528, the solution according to the present invention provides for reducing the weight of the pad as a whole, thus reducing wear on the seals and the noise level. In this connection, it is important to note how the pad according to the present invention allows the use of shorter rivets, thus reducing overall weight.

Moreover, the number of component parts for assembly is also reduced, with obvious advantages in terms of output and cost.

Finally, the pad according to the present invention is more flexible, thus improving friction and, hence, braking efficiency.

## Claims

1. A railway vehicle disk brake pad (5) comprising a base plate (1); a number of supporting plates (7) fitted to the base plate (1); and a number of friction members (6) fixed to said supporting plates (7); said base plate (1) comprising a number of perforated drawing portions (2), each of which comprises a projection (3) on which a respective supporting plate (7) rests directly, thus forming a gap (9) between the base plate (1) and the supporting plate (7); said pad being **characterized in that** said projection (3) has a centre hole (4) engaged by a respective rivet (8) for securing the respective supporting plate (7) to the base plate (1).

2. A disk brake pad (5) as claimed in Claim 1, **characterized in that** each supporting plate (7) is fixed to the base plate (1) by connection to three projections (3) of respective perforated drawing portions (2) arranged in the form of a triangle.

3. A disk brake pad (5) as claimed in Claim 2, **characterized in that** each friction member (6) is triangular in shape.

4. A disk brake pad (5) as claimed in one of the foregoing Claims, **characterized in that**, in plan form, each said projection (3) is circular.

## Patentansprüche

1. Schienenfahrzeugscheibenbremsbelag (5) mit einer Basisplatte (1), einer Anzahl von Stützplatten (7), die an der Basisplatte (1) montiert sind, und einer Anzahl von Reibungselementen (6), die an den Stützplatten (7) befestigt sind, wobei die Basisplatte (1) eine Anzahl perforierter Zugabschnitte (2) aufweist, die jeweils einen Vorsprung (3) aufweisen, worauf eine jeweilige Stützplatte (7) direkt aufliegt, wodurch zwischen der Basisplatte (1) und der Stützplatte (7) ein Zwischenraum (9) gebildet ist, **dadurch gekennzeichnet, dass** der Vorsprung (3) ein mittleres Loch (4) aufweist, in das eine jeweilige Niete (8) eingreift, um die jeweilige Stützplatte (7) an der Basisplatte (1) zu befestigen.

2. Scheibenbremsbelag (5) nach Anspruch 1, **dadurch gekennzeichnet, dass** jede Stützplatte (7) durch Verbindung mit drei Vorsprüngen (3) jeweiliger perforierter Zugabschnitte (2), die in Form eines Dreiecks angeordnet sind, an der Basisplatte (1) befestigt wird.

3. Scheibenbremsbelag (5) nach Anspruch 2, **dadurch gekennzeichnet, dass** jedes Reibungselement (6) dreieckig ist.

4. Scheibenbremsbelag (5) nach einem der vorhergehenden Ansprüche, **dadurch gekennzeichnet, dass** jeder Vorsprung (3) in planarer Form kreisförmig ist.

## Revendications

1. Plaquette (5) de frein à disque pour véhicule ferroviaire comprenant une plaque de base (1) ; un certain nombre de plaques de support (7) installées sur la plaque de base (1) ; et un certain nombre d'éléments de frottement (6) fixés auxdites plaques de support (7) ; ladite plaque de base (1) comprenant certain un nombre de parties d'étirage perforées (2), chacune d'elles comprenant une projection (3) sur laquelle repose directement une plaque de support (7) respective, formant ainsi un espace (9) entre la plaque de base (1) et la plaque de support (7) ; ladite plaquette étant **caractérisée en ce que** ladite projection (3) comporte un trou central (4) engagé par un rivet (8) respectif pour fixer la plaque de support (7) respective sur la plaque de base (1).

2. Plaquette (5) de frein à disque selon la revendication 1, **caractérisée en ce que** chaque plaque de support (7) est fixée à la plaque de base (1) par liaison à trois projections (3) de parties d'attraction perforées (2) respectives agencées sous la forme d'un triangle.

3. Plaquette (5) de frein à disque selon la revendication 2, **caractérisée en ce que** chaque élément de frottement (6) est de forme triangulaire.

4. Plaquette (5) de frein à disque selon l'une des revendications précédentes, **caractérisée en ce que**, sous forme de plan, chaque dite projection (3) est circulaire.
